## Europäisches Patentamt

## European Patent Office

## Office européen des brevets

(11) Publication number: **0 198 617**
**B1**

---

(12) # EUROPEAN PATENT SPECIFICATION

(45) Date of publication of the patent specification:
23.11.89

(51) Int. Cl.⁴: **H02K 33/02**, F04B 35/04,
F04B 17/04

(21) Application number: **86302250.5**

(22) Date of filing: **26.03.86**

---

(54) **Non-linear electromagnetic vibration fluid compression device.**

---

(30) Priority: **20.04.85 CN 85103417**
**01.04.85 CN 85102855**

(43) Date of publication of application:
**22.10.86 Bulletin 86/43**

(45) Publication of the grant of the patent:
**23.11.89 Bulletin 89/47**

(84) Designated Contracting States:
**AT BE CH DE FR GB IT LI LU NL SE**

(56) References cited:
**DE-A- 821 000**
**DE-A- 2 310 955**
**DE-A- 2 950 831**
**DE-C- 902 641**
**GB-A- 1 551 522**
**GB-A- 2 017 422**
**GB-A- 2 018 523**
**US-A- 2 721 453**

(73) Proprietor: **Shanghai New Mechanical Technology Development Centre, Shanghai University of Technology 149 Yian Chang Road P.O. Box 195, Shanghai(CN)**

(72) Inventor: **Cao, Pei Sheng, 33/5 Jiao Tong Road, Shanghai(CN)**

(74) Representative: **Wilson, Nicholas Martin et al, WITHERS & ROGERS 4 Dyer's Buildings Holborn, London EC1N 2JT(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to electromagnetic, vibration, fluid compression devices of the type outlined in the preamble of claim 1.

Such a fluid compression device is described in US-A 2 721 453 and GB-A 1 551 522. In both these devices a linear motor having a vibrating core carrying pistons at either end thereof moves under the influence of a fluctuating magnetic field provided by an electromagnet. In US-A 2 721 453 the movable core is biased towards the central position by coil springs at either side thereof acting between fixed plates and opposite end faces of the core.

Non-linear electromagnetic vibration devices are known in the art and reference may be made, for example, to DE-A 2 950 831 wherein an armature and electromagnet are movable relative to one another and are connected by means of a set of leaf springs. The compression device of the present invention makes use of an improved non-linear, electromagnetic vibration device which is described and claimed in EP-A 0 200 357, which application claims the same earliest priority date as the present application.

If an electromagnetic vibration device is used as a power source for a reciprocating fluid compressor, direct transmission and resonance may be effected and energy conservation can be relatively enhanced. However, there are usual disadvantages associated with linear type electromagnetic vibration devices, such as small amplitude, unstable vibration characteristics, and limited discharge and working pressure. Therefore, ordinary fluid compression devices using linear electromagnetic vibration devices as a power source unavoidably possess problems in the form of inadequate displacement, working pressure, and lack of efficiency and stability.

Ordinary compressors utilizing electromagnetic vibrators are generally inadequate to achieve sufficient precision of directional vibration. Consequently, cylinders, pistons, or other parts of a working compressor are easily jammed, stuck, or otherwise subjected to non-uniform wear, resulting in unnecessary and extensive damage to the compressor embodying the vibrator. The problem becomes especially pronounced, to a degree hindering normal use, when the electromagnetic vibrator is not coaxially mounted with respect to the compressor cylinder. For this reason, ordinary compressors utilizing an electromagnetic vibrator as a source of power may be properly and effectively operated only in low demand conditions.

In an attempt to alleviate some of these problems, it has been known to employ a multi-stage link in fluid compression devices. However, this modification significantly complicates the structural configuration and achieves relatively little improvement in performance.

Still further, because of the low orientation accuracy in an ordinary electromagnetic vibrator, the vibrator and other components of the compression device are most often arranged coaxially to prevent uneven wear and sticking between cylinders and corresponding pistons. Thus, reciprocating fluid compression devices using an ordinary electromagnetic vibrator as a power source can be used only in certain applications where high performance is not essential.

The difficulties suggested in the preceding are not intended to be exhaustive, but rather are among many which may tend to reduce the effectiveness and satisfaction with prior fluid compression devices. Other noteworthy problems may also exist; however, those presented above should be sufficient to demonstrate that fluid compression devices appearing in the past will admit to worthwhile improvement.

The compression device of the present invention as defined in claim 1 overcomes the technical problems outlined above.

In particular, embodiments of the invention have the advantages of good-alignment and higher amplitude drive than has previously been attainable. This provides for highly efficient and stable operation without excessive power consumption or undue friction.

The preferred fluid compression device embodying a non-linear, electromagnetic vibration device may be properly and effectively operated in a wide range of variable demand conditions. It embodies a non-linear, electromagnetic vibration with a high level of precision in directional vibration with a highly efficient and stable operation. The device is capable of high amplitude vibrations during compressor operations and is generally frictionless in operation.

The preferred arrangement is low in maintenance and capable of being sealed within a container for extended operation.

BRIEF SUMMARY OF A PREFERRED EMBODIMENT

The invention as disclosed presents a reciprocating fluid compression device including as the power source a novel, non-linear, electromagnetic vibration devices invented by the applicant herein and the structure of which is disclosed in detail in a separate patent application. The vibrator has high efficiency, stability, orientation accuracy, and large amplitude, and has many adaptive forms suitable for compression devices of different requirements.

The non-linear, electromagnetic vibration device employed in a preferred embodiment of the instant reciprocating, fluid compression device includes an electromagnet, a frame, a linking block, and at least one segmented, corugated leaf spring set. The center of each corrugated leaf spring is connected to an armature of the electromagnet through the linking block. The two ends, of each corrugated leaf spring, are connected to the core of the electromagnet through the frame. An air gap is selectively maintained between the core and armature of the electromagnet. Two corrugated leaf spring sets may be mounted respectively at opposing ends of the vibrator, or the vibrator may include only one corrugated leaf spring set with that set being mounted at one end of the vibration device. When a pulsating vibration-exciting current is set up in the coil of the electromagnet, the core and armature of the electromagnet, together with the corrugated leaf spring sets, drive a main vibrating part and a relative vibrating part, via electromagnetic force and non-linear elastic restoring force, to vibrate in a non-linear manner at a frequency corresponding to that of an exciting frequency.

The instant fluid compression device, according to a preferred embodiment, employs a simple single stage link structure connecting the armature of the non-linear, electromagnetic vibration device to the piston of at least one corresponding reciprocating compression cylinder. The vibration device has portions thereof fixedly connected to said at least one corresponding reciprocating compression cylinder. Each piston of a respective compression cylinder is coupled to the electromagnetic armature through an associated single stage link member and a support block to which an end of the electromagnetic armature is fixed.

In one embodiment a reciprocating compression cylinder can be fixedly linked to the front or rear side of the non-linear electromagnetic vibrator in a coaxial manner. Two or more reciprocating compression cylinders can also be fixedly linked concurrently to both right and left sides or the top and bottom, or other portions of the non-linear electromagnetic vibration device in a non-coaxial manner therewith. The overall combination is operative as a fluid compressor suitable for use in various refrigeration or other pump-type applications.

## BRIEF DESCRIPTION OF THE DRAWINGS

FIGURE 1 illustrates an axonometric view of a non-axially arranged dual cylinder, reciprocating fluid compression device, according to a preferred embodiment of the instant invention.

FIGURE 2 illustrates an exploded view of a non-linear, electromagnetic vibration device for use in a reciprocating fluid compression device, shown in FIGURE 1, according to a preferred embodiment of the instant invention.

FIGURE 3 is a partially cross-sectioned view of fluid compression piston and cylinder assemblies mounted upon opposing sides of a non-linear, electromagnetic vibration device as shown in FIGURE 1.

FIGURE 4A illustrates an axonometric view of the compression cylinder component of a reciprocating fluid compression device according to one embodiment of the instant invention.

FIGURE 4B illustrates an exploded view of a compression cylinder component featured in FIGURE 4A.

FIGURE 5 illustrates a partially cross-sectioned view of a lubricating oil plunger pump for use in the reciprocating fluid compression device according to one embodiment of the instant invention.

FIGURE 6 illustrates a coaxially arranged, single cylinder, non-linear, electromagnetic reciprocating fluid compression device according to an alternate embodiment of the instant invention.

FIGURE 7 illustrates an electrical circuit for supplying working frequency current.

## DETAILED DESCRIPTION

### Terminology

Prior to providing a detailed description of various preferred embodiments of the invention it may be worthwhile to briefly stablish operative terminology in connection with the subject non-linear electromagnetic device.

In the instant invention the drive for the compressor comprises an electromagnetic oscillation installation which may be regarded as a bipolar oscillating system. The core of the electromagnet and other structures fixedly connected thereto in combination constitutes a first vibrating part of a given mass M1. On the other hand, the armature of the electromagnet and other structures fixedly connected thereto in combination constitutes a second vibrating part of a given mass M2. During oscillation, these two oscillating parts make reciprocating motion relative to their respective static positions prior to such oscillations. The corresponding amplitudes of oscillation of these vibrating parts are inversely proportional to the associated given mass as given by the equation $A1/A2 = M2/M1$ wherein A1 and A2 represent respective amplitudes and M1 and M2 represents respective masses of the vibrating parts. Of these two vibrating parts, the one of comparatively smaller total mass has comparatively larger amplitude, and is referenced herein as the main oscillating or main vibrating part. The other vibrating part of larger mass and smaller oscillation amplitude is referenced herein as the relative oscillating or relative vibrating part. The total amplitude of the bipolar system, A, is the sum of the main vibrating part and the relative vibrating part amplitudes, $A1 + A2$. If the mass ratio M2/M1 is greater than ten (10), that is A1 is 10 times A2, then the whole electromagnetic oscillating system can be regarded as a single proton oscillating system. In this event, the total amplitude value A may be regarded as being approximately equal to A1. Similarly, it is possible to adjust the amplitude ratios of the two vibrating parts by adjustments in their respective mass. Accordingly, depending on the manner of connection of various system components to the electromagnet core or to the electromagnet armature, main and relative vibrating parts of various different mass, configuration, and oscillation amplitude may be formed.

Structure and Operation

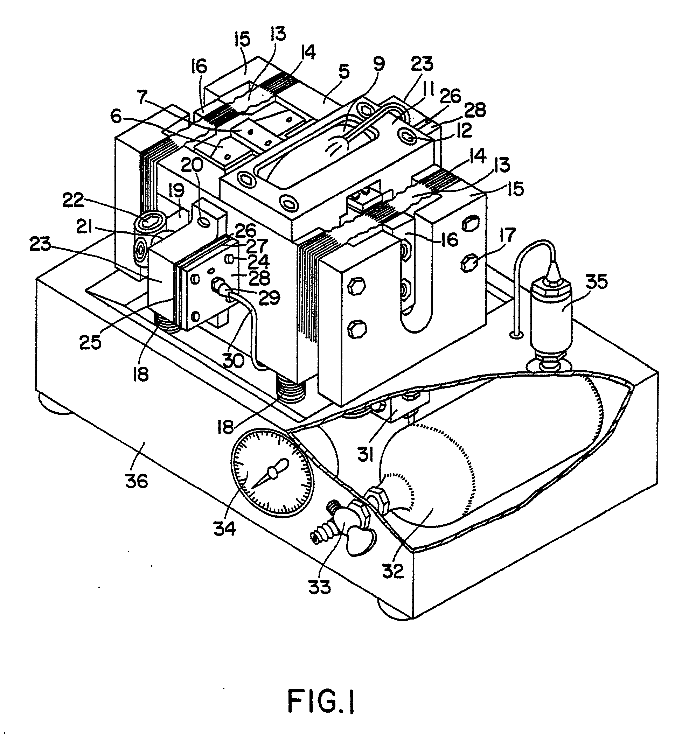

Referring now to the drawings wherein like numerals indicate like parts, Figures 1-3 show a preferred embodiment of the instant invention, comprising a compressor unit employing a single stage link structure for connection to respective reciprocating piston-cylinder units, and a non-linear, bellows spring plate, electromagnetic vibration device as a source of vibration for the compressor.

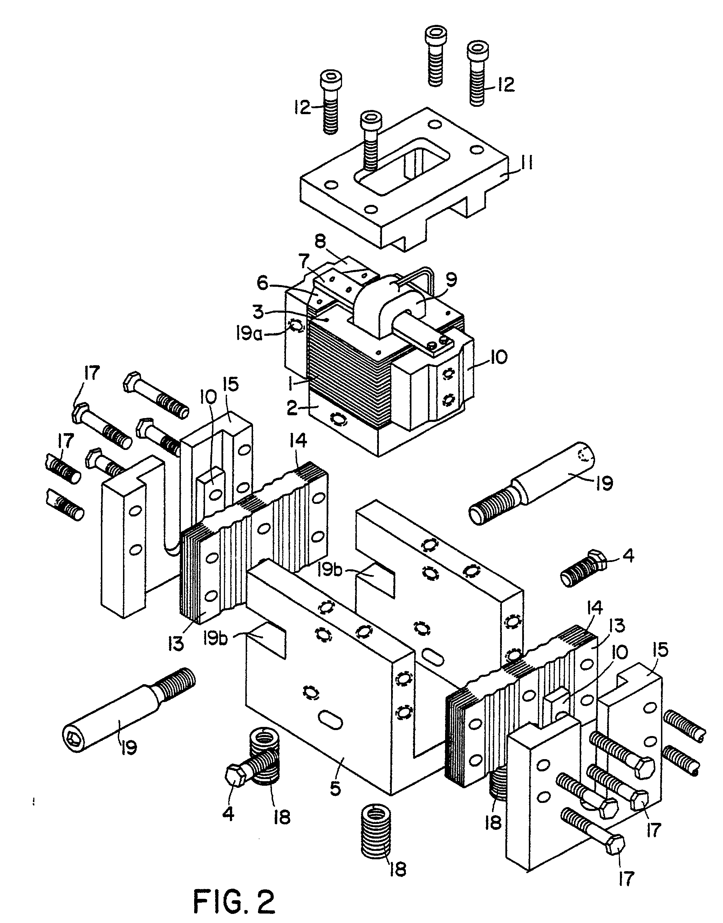

In reference to Figures 1 and 2, the non-linear electromagnetic vibrator comprises an electromagnet frame 5, waveform plate spring sets 13, and armature link blocks 8 and 10. The central structure 1 includes an electromagnet. The electromagnetic armature 6 is fixedly coupled at its opposing ends to armature link blocks 8 and 10 which are in turn connected to a central portion of a respective sectionalized waveform plate spring set 13 in-between two sections of each plate spring in the corresponding spring set. Portions of the frame 5 are fixedly connected to the opposing ends of each sectionalized waveform plate spring set. When the vibrator is in operation, the armature 6 oscillates in a direction generally perpendicular to the primary disposition of the sectionalized waveform plate spring sets.

A dual-piston-cylinder type non-linear electromagnetic vibration air compressor is shown in Figure 1. The power source of the said air compressor is a non-linear, bellows spring, electromagnetic vibration device spearately illustrated in Figure 2 in which an electromagnetic core 1 of the electromagnet is riveted to a base 2 by means of rivets 3 to form a single unit. The electromagentic core connected to a generally U-shaped frame 5 by means of a screw 4 on each side of the frame.

An armature 6 of the electromagnet is riveted to upper and low linking plates 7 and is connected to a front linking block 8 by means of welding or the like. An electromagnetic coil 9 is placed in the core assembly of the electromagnet and the armature assembly is inserted toward a rear linking block 10 after passing through an inner hole of the core 9. An upper cover 11 presses tightly against the electromagnet core by means of screws 12.

Two sets of sequentially arranged corrugated leaf springs (i.e. bellows or sectionalized waveform plate springs) are placed at the two ends of the frame 5 respectively. Each leaf spring is separated by means of a washer 14. Although only a front and end spring are shown in the drawings, each spring set 13 may comprise a plurality of individual springs separated by the thin spacer washers 14. At the center and two ends of each bellows leaf spring set 13 there are three assembly sections, each plate having two punched assembly holes through each assembly section. A pressing plate 15 is located at the outer side of the two sets of corrugated leaf spring sets 13 and tightly presses the corrugated bellows spring against the frame 5. At the center of each end of the electromagnetic vibrator is pressing strap 16 which tightly presses the central assembly portion of the corrugated bellows springs 13 against a corresponding end block. At each of the two ends of the non-linear electromagnetic vibrator four screws 17 respectively pass through assembly holes at two ends of the pressing plate 15 as well as assembly holes at two ends of the corrugated leaf spring set 13 and screws down into holes at two ends of frame 5. At the center of each end of the electromagnetic vibrator two screws 17 pass through assembly holes of the pressing strap 16 and assembly holes at the central assembly plate of the corrugated leaf spring set 13 and screw down into holes at the center of front linking block 8 and rear linking block 10 forming a non-linear, bellows plate spring, electromagnetic vibration device.

The sectionalized bellows (waveform) plate spring sets are non-linear elastic components. The non-linear characteristics may be conveniently selected and designed to suit different application environments. In the overall vibration assembly, each waveform plate spring of one configuration may be used in combination with waveform plate springs of the same or other kinds to suit the particular requirements of different application environments. These sectionalized plate springs have smooth non-linear characteristics and a wide range of potential behavior in combination to support a correspondingly wide range of desirable flexibility and rigidity. There is very minimal internal damping, and a very long fatigue life. The plate springs provide high precision in directional motion, and high adjustability for self-adapting control. In all these aspects the subject invention manifests optimal performance in comparison with common linear springs, sectionally linear composite springs, and other existing non-linear springs.

The number of waveform plate springs in each spring set 14 may be varied and selectively adjusted to vary the vibration frequency responsive to an exciting frequency from a source. If the number of plate springs is raised to equal the square of an integral times the number required for a harmonic response, the vibration frequency may be multiplied a corresponding integral times. Similarly, if the number of plate springs is made to equal the square of an inverse integral times of the number required for a harmonic response, then the vibration frequency can be made to equal an inverse integral times of the exciting frequency. In this manner, frequency conversion and multiplication under harmonic resonance can be achieved via mechanical adjustments of the number of plate springs. The need for a complex electronic frequency converter is completely eliminated. With the subject vibration assembly, the resonance state can be persistently maintained under no load, or varying rated load conditions. The concept is based on the unique characteristic of strong non-linear systems in being able to generate harmonic resonance.

The spring-set stiffness may be varied by varying the number of plate springs, and thus can be made to equal the square of an integral or of an inverse integral times the degree of stiffness under harmonic response. The inherent vibration frequency may be raised an integral times or an inverse integral times by combined adjustments in the mass of vibrating parts and the vibration stiffness. Accordingly, the subject vibration assembly is able to achieve harmonic resonance characteristics in mechanical vibration as in non-linear electromagnetic wave vibration. The instant device enables frequency multiplication and frequency conversion of harmonic response to be achieved for resonance type mechanical vibration without requiring an independent electronic frequency converter device.

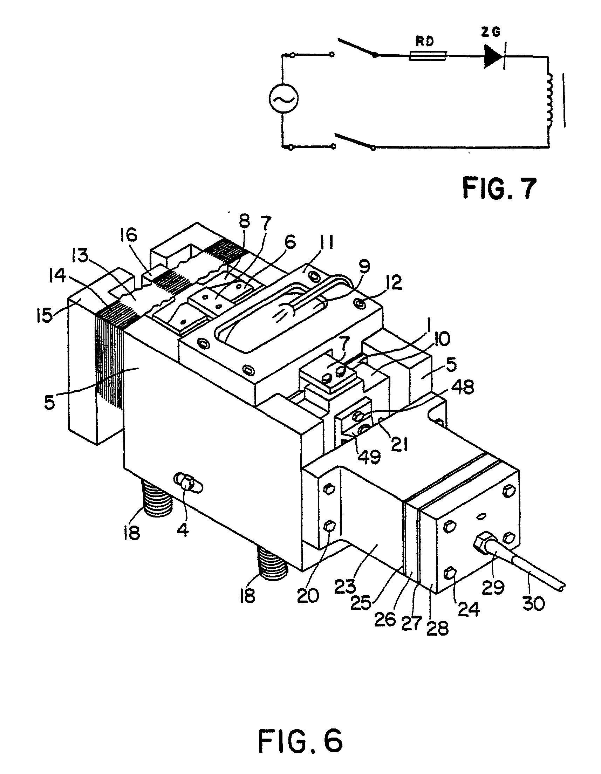

When the vibration device is activated, an electrical exciting current flows through coil 9 (note Figures 2 and 7), pulsed attraction is generated by electromagnetic action. The spring-sets are correspondingly elastically flexed in unison towards a common direction along a linear axis parallel to the longitudinal axis of the upper connecting plate 7. Because the springs are sectionalized, and because opposing ends of each section of each plate spring are couple to different vibrating parts, main and relative, as discussed above, two self-reciprocating parallelograms are formed which share a mjaor side along an axis parallel to the central longitudinal axis of the upper connecting plate 7. Each side wall of frame 5 constitutes the other major side of each parallelogram, and a corresponding section of each plate spring collectively forms every minor side of each of said two parrallelograms.

The whole electromagnetic vibration device is separated from other elements of the compressor by means of four isolating springs 18 and forms an independent dual-mass vibration system.

When an alternative vibration-exciting current is set up in the electromagnetic coil 9, pulsating electromagnetic force is created between the electromagnetic core 1 and armature 6 and, together with the non-linear elastic restoring force exerted by the non-linear bellows plate spring sets 13, generates forced vibration at a frequency equal to the frequency of the vibration-exciting current produced from a conventional electrical source such as shown schematically in Figure 7. A main vibrating mass is composed of the armature assembly, front linking block 8 and rear linking block 10. A relative vibrating mass is composed of the electromagnetic core assembly, frame 5, upper cover 11 and front and rear pressing plates 15. When the inherent frequency range is modulated by means of changing the number of springs in the corrugated, bellows plate, spring set 13 so that the electromagnetic vibration is near resonant state at the frequency of the vibration-exciting current. It has been found that a designed amplitude of 6–7 mm can be reached when the exciting frequency is 50 Hz, and non-linear vibration characteristics can be obtained.

In a preferred embodiment of the instant invention a solenoid type electromagnet is utilized. In comparison with a common n or E type electromagnet, the solenoid type has a larger electromagnetic attractive force and travel, and is much easier to connect its two ends to double elastic components, and to carry out position fixing and air gap trimming. In addition, the structure of the entire electromagnetic vibrator is made power-head-like so that it is easy to connect to and maintain. The core, upper cover and adjoining frame to the core, the armature, and front and rear support blocks of the armature all can be used as the unit for producing the principal vibration. In this manner, the structure can be employed flexibly and mechanical vibration can be sent out conveniently through attachments with simple connecting parts at a number of alternative positions.

A significant breakthrough in the technical field of non-linear vibrating machines made by the present invention lies in the fact that subject springs have been selected to exhibit exponential/sine waveforms. A curve for shifting its standard rigidity is determinable and the parameters for the springs optimal working characteristics are conveniently selectable. This type of non-linear vibration not only depends upon the average rigidity of the vibratory elastic component but has also a close relationship with its rigidity curve and structural damping. The exponential/sine waveform spring adopted in the present invention has smaller structural damping than other springs and the relationship between stress and strain is approximately a logarithmic function.

Let "f" be the stress and "$\ell$" the strain. Then

$$\ell = \alpha 1n(1+\beta f),$$

where $\alpha$ and $\beta$ are parameters which can be determined by the method of least square from experimental data. Conversely, "f" can be written as an exponential function of the strain:

$$e^{\frac{\ell}{\alpha}} = 1+\beta f$$

$$\therefore f = \frac{1}{\beta}(e^{\frac{\ell}{\alpha}} -1).$$

Its rigidity function is found to be

$$\frac{df}{dx} = \frac{1}{\alpha \rho}e^{\frac{x}{\alpha}}.$$

Calculations by microcomputer show that the vibration type non-linear spring with such rigidity function exhibits a stable periodic vibration (under rather extensive external force conditions and for certain amplitudes). The computer has also drawn out its stable limiting rings of the phase space under various parameter conditions.

Even with an elastic vibration component of excellent performance, normal operation of a vibrating machine still cannot be fully ensured with conventional systems. This is because external conditions may vary in different ways when the machine is in operation. Thus, for example, when it is used for cutting, the damping in cutting would vary with the change of the hardness and dimension of the work piece being cut; when it is used for conveying and sifting of material, the quantity and variety of the material would entail change in the vibrating mass; and when it is used in compressing gases (vibratory compressor), which is equivalent to attaching a gaseous spring, the change of rigidity curve would arise. The change in these conditions would affect the type of respective vibrations and may cause them to transfer from the near resonance area to the far resonance area and to come out of stable limiting rings and get into a non-stable state, with the result that the vibrating machine either could not operate normally or would exhibit reduced performance during operation.

The present invention has effected three kinds of vibration control, viz:

Damping control (stability control for varying damping);

Rigidity control (stability control for varying rigidity); and

Mass control (stability control for varying mass).

The fundamental principle of control is the method of feedback function, i.e., a preset feedback (self-compensating) function is to be formed by designing electromagnetic, elastic, and mass damping systems. Once the working conditions of a vibrating machine undergoes a change within a certain range, the feedback function would automatically play a role to control and offset the change in external conditions so that the machines may continue to work normally.

The feedback function is implemented by the following procedures:

(a) Procedure of Electromagnetic Feedback As the amplitude of vibration decreases with the increase of external damping, the velocity of vibration, and, therefore, the resistance of the coil, is reduced, leading to the increase of the current. The result is the increase of the amplitude. This control effect is called electromagnetic feedback, which is particularly manifested as the increase of power with increase of external damping (working damping). To exploit the feedback effect to the utmost, the present invention has made the optimum selection of the gap between the electromagnet and yoke and has used a plug-in yoke so that the maximum feedback effect can be obtained without any collision. The hard spring which the present invention has adopted causes the vibrating body to reduce its velocity abruptly when it reaches the limiting position, which also contributes to the maximum exploitation of this control effect. Moreover, in the design of the coil-rectifier circuit, various forms such as full-wave, full-wave rectification, half-wave rectification, and "full-wave (electromagnet) x full-wave rectification (yoke)" may be employed to meet different working requirements.

(b) Procedure of Preset Stress In the course of the design, working area, i.e., near resonance, is chosen not only according to the curve of the elastic component, but by matching the selection of parameters the component is made to work outside the working area. Once either the external damping or the mass in creases, the elastic component would return from the outside to the inside of the working area. The resonance force inside the working area would assist to compensate for the deterioration of external conditions so that the machines can operate normally.

(c) Procedure of Auxiliary Springs In the design of vibrating machines, beside the elastic component producing the principal vibration, several sets of auxiliary springs may be installed to meet any possible variation of external conditions. When external changes interfere with the mass and rigidity, these auxiliary springs, would to varying degrees, play a part automatically, resulting in compensatory changes in the rigidity of the vibration system so that the machines can operate normally.

The above control procedures may be used either separately or jointly with one or more of them together. In a specific design, differential equations may be formulated on the basis of test data to be solved by simulation and, if necessary, a computer may be used for optimizing operating conditions.

Bellows (Waveform) Type Plate Springs

Non-linear rectangular bellows type plate spring group is a generally significant operating element of the subject invention by which the main characteristics of the electromagnetic vibration facility and hence, those of the vibration machinery using such facility as its power source are determined.

The main characteristic of this element is the application of thin bellows type plate spring pieces with a generally rectangular outer dimension, and separate segment sine configuration or exponential function and the spaced lamination of such plate springs into a group. Each bellows type plate spring piece has an assembly hole or separate segment assembly plane, so as to use a bolt for fixing and restraining it. Aluminum washer shims may be used between these assembly planes, so that friction may be avoided, when deformation between plate springs is produced.

The main characteristics of the subject bellows type plate springs may be described in some detail as follows:

(a) Constructed by Thin, Rectangular Plate Spring Piece

A conventional plate spring piece used in electromagnetic vibration machinery is constructed by a thick (2mm) rectangular plate spring piece. There is neither a bellows configuration nor assembly hole on it. The pieces are used in a non-fixed-restraint mode, with the plate spring laminated in a group, and comprising elastic elements with linear elastic characteristic. There were also previously known single-piece, thick, circular plate spring pieces with concentric circle series washer elements, forming a non-linear characteristic or deformation with separate segment linearity to a definite stage and thereafter presenting a non-linear characteristic.

The bellows type plate spring of the subject invention is composed of thin, generally rectangular plate spring pieces.

Each bellows type plate spring piece is generally 0.3–1.5 mm thick. To compare the thin type plate-spring piece with thick type plate-spring piece, we find that the internal damping of the former decreases exponentially, when they are laminated in a group and used. Total damping is still less than that of a comparatively thick type plate-spring piece with the same rigidity, but the strength of the transverse bream constructed by the former increases with the increase in total area of cross section. In comparing rectangular bellows type springs with disc shape bellows type springs or with rectangular plate springs, it is found that the internal damping determined by the construction factor is also much smaller. When a generally rectangular bellow type plate spring is in the state of working deformation, deformation in a rectangular bellows type plate spring through the bending or twisting action on a vertical line of the bellows may be much higher than that of various conventional plate springs (such as rectangular, non-bellows or disk shape, bellows plate springs) and that of rubber springs under the same action force; yet, in the direction of non-working deformation, there is a very large mono-directional rigidity. Therefore, when the subject invention is used in a vibration facility, and vibration motion is produced, both large vibration amplitude and high orientation is obtained.

Each generally rectangular plate spring may have a shaped outer dimensions, such as straight, convex or concave.

(b) Vertical Bellows with Sinusoidal Configuration Or Exponential Function

As mentioned above, with generally rectangular bellows type plate spring pieces, the vertical bellows has a unique influence upon reducing the structural internal damping and assuring correctly oriented motion. Furthermore, there are various kinds of cross-sections of the bellows, whatever the overall outer dimension of the plate spring, such as sinusoidal configuration type, exponential function type and other different forms of bellows type cross-section. These kinds of plate spring pieces have excellent longevity in the fatigue type working state, because the deflection curve is very smooth and the rate of variation may approach an infinitesimal value.

(c) Continuous Non-Linearity of the Elastic Characteristic Curve and the Versatile Selectivity of the Curve

The elastic working characteristic of the vertical, bellows type spring piece of this invention presents the variation of continuous-non-linearity within the entire scope of working deformation from start to end. Many kinds of conventional non-linear springs, such as a non-cylindrical spiral spring and so on, usually enter a region of non-linear characteristics only after they have been deformed to a specified extent, and some other non-linear springs, such as linear plate springs, non-linear spiral springs and some combinations of such springs constitute a non-linear characteristic curve by exhibiting separate segment linear characteristics. The generally rectangular, bellows plate spring of the subject invention not only has a pronounced, continuous, complete curve of non-linear elastic characteristic, but also may selectively obtain many different kinds of characteristic curves of non-linear elasticity through changing the design parameters of plate-spring, such as its outer shape, thickness, different bellows shape cross-section elastic waveform, depth of each bellow trough and different techniques of heat treatment. A transistor triode can be used as an example to explain the above mentioned situation. Every kind of transistor triode has its own amplification characteristic curve which may be selected according to a technical specification, and therefore, may satisfy different technical requirements of usage and control. Particularly, in the state of different external load fluctuations, if the proper curve of non-linear elasticity character can be designed and selected, then proper non-linear feed-back characteristics can be achieved to maintain the stability of vibration of the entire system.

(d) Fixed Restraint

The generally rectangular, bellows plate-spring group of the the subject invention is different from conventional plate-spring groups. It adopts an assembly mode of fixed restraint with assembly holes which differ from that of conventional, single, non-linear springs. In addition, it utilizes a method of spaced lamination in a group for use, so, springs of this invention has both the characteristic of non-linear elasticity as well as versatile and unique modulation characteristics. The total rigidity of the vibration system can be modulated by increasing or reducing the number of pieces of the bellows plate-spring sets, to realize one order harmonic resonance or multiple order harmonic resonances. Under the conditions or resonance, owing to the above-mentioned characteristics of low internal damping and non-linear motion of the spring of the instant invention, it is possible to obtain much larger resonance amplitudes and spontaneous acceleration characteristics than those of previously known linear and non-linear electromagnetic vibration facilities. Therefore, the energy consumption per unit of vibration strength decreases considerably, and a novel harmonic resonance type double frequency variation method is thus formed.

To summarize, non-linear rectangular bellows plate spring group of this invention has main characteristic of fixed restraint in application, such as, separate segment sine configuration type or exponential function type bellows plate spring with thin and rectangular outer shape and laminating in group, therefore, its elasticity characteristic curve has continuous non-linearity and versatile selectivity of characteristic curve. When it is used in electromagnetic vibration facility or various kinds of vibration machinery, if compared with any known linear or non-linear spring, it may obtain the best and the most stable performance characteristics of vibration in many respects, such as: convenience in design, selection and test of characteristics curve of non-linearity, minimum internal damping, large amplitude, large spontaneous acceleration and high precision orientation, one or more than one harmonic resonance, realization of double frequency variation of excited resonance, as well as high strength and long fatigue-resistant duration time.

Solenoid Type Electromagnet

A conventional electromagnetic vibration unit typically uses a shape "E" shape or "H" shape electromagnet. An electromagnetic vibration facility of this invention uses a solenoid type electromagnet wherein the armature is generally T-shaped and an electromagnetic core is generally U-shaped which may better concentrate its electromagnetic attraction in the magnetic field. Furthermore, the electromagnet of the instant invention is made to include unique electromagnetic elements. Silicon steel sheet of high silicon content is used to replace that of low silicon content as a basic material of the electromagnet. In this manner, larger electromagnetic attraction forces can be obtained than that of a conventional unit. In addition, dual reciprocation structures of parallelogram shaped cross-section can be easily constructed to include both front and rear sectionalized waveform plate spring sets on opposing sides of the electromagnet so as to assure a high precision fixed direction motion of the vibration system during system operation.

Control and Adjustment

(a) Control and Adjustment of Performance Characteristics of One or More then One Harmonic Resonance

In conventional linear and non-linear electromagnetic vibration facilities, only the form of a base wave resonance can be used for performing resonance control and adjustment.

According to the instant invention, harmonic resonance can be produced by adjusting the total rigidity of the non-linear spring sets in the vibration facility. Moreover, through an adjustment of the number, size, bellow shape, and heat treatment of the springs, the total rigidity can become the square of an integral fold or square of a fraction of an integral fold of the predeterminable rigidity in harmonic response. A simultaneous adjustment of the vibrating mass and the total rigidity of the vibration system can yield a vibration frequency higher than that in base wave resonance by an integral fold or a fraction of an integral fold. Therefore, harmonic resonance characteristics traditionally achieved via supplemental electrical controllers can be obtained mechanically. In this manner, frequency variation for excited resonance frequency can be realized without adding any frequency variation electrical devices.

By adjusting the number of plate springs in one or more sectionalized waveform plate spring set to equal the square of an integral (n) times a number predeterminably required therein for the vibration device to achieve harmonic response, one can yield an integral (n) times the vibration frequency of the source as the operating vibration frequency of the device. Similarly, by adjusting the number of plate springs in one or more sectionalized wave-form plate spring sets to equal the square of an inverse integral (1/n) times a number predeterminably required therein for the vibration device to achieve harmonic response, one can yield an inverse integral (1/n) times the vibration frequency of the source as the operating vibration frequency of the device.

An example of a determination of the number of spring plates is illustrated below:
The number of plates may be obtained by using the following equation

$$(1) \quad W(\chi) = \sqrt{\frac{K(\chi)}{m}}$$

Where $W(\chi)$ is the operating frequency of the system
$\chi$ is the amplitude.
m is the inertia mass in operation.
$K(\chi)$ is the spring characteristic.
Once $K(\chi)$ has been determined, the number of plates can be determined according to this equation.
The wave shape and the plate form are important to the spring characteristic design. The spring design can be solved theoretically as well as experimentally. The spring characteristic depends on the wave shape, the number of waves, the form of the plate and the applied constraint conditions. The spring design must meet the following requirements:

(1) The spring characteristic must comply with the vibration characteristic.
(2) The spring fatigue life must satisfy long-term operating conditions.

As the applications of springs are extensive, springs used on various vibrating machines may be different from each other. Various springs may be designed qualitatively according to the following comments to determine their parameters, then modified by routine experiments.

I. Spring Characteristic

Using the following terminology:
$K(\chi)$ is the spring characteristic
r is the radius of wave shape
S is the plate thickness
b is the plate width
$\ell$ is the plate length
n is the number of waves
The spring characteristic $K(\chi)$ will be
proportional to $S^3$.
proportional to b,
inversely proportional to $\ell^2$,
inversely proportional to $r^2$ (using an equivalent arc for other curves),
proportional to

$$\frac{1}{n},$$

if the spring material has been determined (consider every wave as a spring, then spring with n waves is equivalent to n shorter springs connected in series).
Therefore

$$\frac{1}{K} = \frac{1}{K_1} + \frac{1}{K_2} + \frac{1}{K_3} + \cdots + \frac{1}{Kn})$$

II. Selection of Spring Shape

A. Wave Shape: In determining the wave shape of a spring, a matter of main concern is the fabricating method and its fatigue strength. The sinusoidal and exponential reduction curves are superior to others. Research results of large deflection theory indicates that all $n^{th}$-order differentiable curves and combined curves will not cause stress concentrations, thus behave better for shock resistance and fatigue resistance. Other curve shapes can not be used, however, that forementioned curves are better. In cases of large changes of acceleration, the forementioned curves are greatly preferred.
B. The plate form may be tailored to comply with the stress distribution and adjustment of the spring characteristic, provided the directional vibration requirement has been met.

Referring again to the above equation (1), resonance will take place so long as $W(\chi)=n\omega_2$ (where n=1,2,3...k or n=1,1/2,1/3....1/k) with the operating frequency of power supply being $\omega_1$, it is so called harmonic resonance, which is non-linear vibration characteristic.

In application, $W(\chi)$ is selected as required, then $K(\chi)$ can be determined based on the inertia mass "m", where $K(\chi)$ is the general characteristic of the springs required by the system. It is possible to design the spring according to $K(\chi)$, suppose the characteristic of each spring is $R(\chi)$, then $R(\chi)=K(\chi)/n$, where n is the number of the plate springs.

In an air compressor as an example (to be described in detail below) assume the motion equation of the compressor;

$$ m\ddot{\chi} + r(\dot{\chi},\ddot{\chi}) + K(\chi) = F(t) $$

will satisfy the operating requirements. The compressor cylinder acts as an air-spring $K_1(\chi)$ during the compressing process. Now a spring $K_2(\chi)$ needs to be added in series $K(\chi) = K_1(\chi) + K_2(\chi)$ to meet the operating requirements. Then $K_2(\chi)$ may be determined by the relationship $K_2(\chi) = K(\chi) - K_1(\chi)$. Knowing or selecting the above referenced variables enables the characteristic and the number of springs to be designed as discussed above. Alternatively, given the structural arrangement disclosed herein, one skilled in the art will be able to quickly select a desired number of characteristics of the spring sets by routine experimentation.

(b) Control and Adjustment of the Stability of Performance Characteristics

Conventional linear electromagnetic vibration devices and vibration machinery are very limited in the region of the stability of performance characteristics under the conditions of fluctuating external loads. Accordingly, complicated electrical control mechanisms are frequently required to improve the stability of performance characteristics. Some existing non-linear type electromagnetic vibration devices, such as rubber spring electromagnetic vibration units and the vibration machinery constructed with it, have been slightly improved in performance stability owing to the feedback of non-linearity characteristic curve, but an electrical control mechanism is still needed and it is very difficult to control and adjust the self-feedback.

No matter how external loads are fluctuated in the form of mass variation, rigidity variation or damping variation and so on, an electromagnetic vibration device according to the instant invention using non-linear bellows plate-spring groups, by taking such spring group as power source and adding a non-linear type elasticity control element according to the requirements, may utilize the self-feedback of the non-linear type elastic element to control and adjust the performance characteristics in a compartively large range by selecting and fitting the proper control spring matching the non-linear elasticity curve according to the scope of external load fluctuations. Therefore, the vibration system can maintain a stable state of resonance within the scope of load fluctuation from start to end. In this manner, the stable performance characteristics can be obtained without adding any electrical control mechanism.

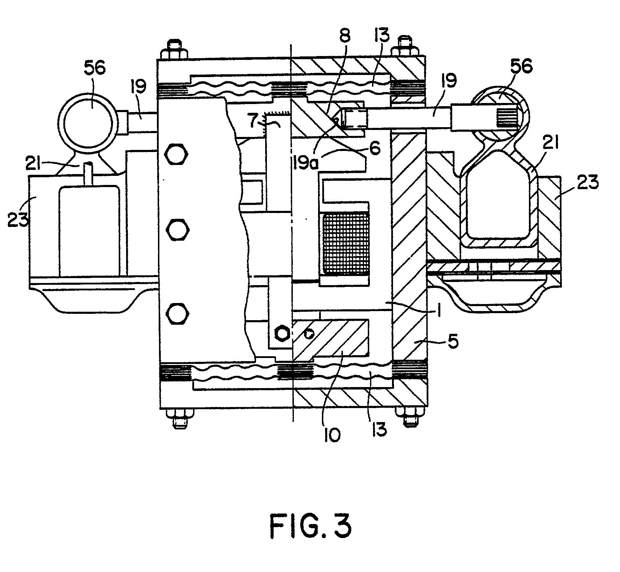

Turning now to Figures 2 and 3, a bore 19a is located at opposing sides of the front armature link block 8. A respective rod link 19 has one end releasably coupled to a corresponding bore 19a in block 8 and extends through a cut-out portion 19b in said frame 5. A mechanical link joint 56 is used to couple the rod link 19 to a piston 21 operably received within a compressor cylinder 23. One cylinder is preferably positioned on opposing peripheral areas of the central structure. The rod link 19 operably transfers motion of the vibrator at its vibration frequency to piston motion and thus to corresponding compression strokes per minute. The full amplitude of vibrator vibration corresponds to the range of compression stroke.

Referring specifically to Fgiures 4A and 4B a piston is located within each compression cylinder 23. The compression cylinder is fixed via fasteners to a lateral wall of the vibrator frame 5. A similar assembly is preferably arranged for balance on both sides of the vibrator, as shown in Figure 1, resulting in a compression device having a single vibrator source and balanced dual compression cylinders including respective pistons therein.

Alternative embodiments may be reasonably constructed by one with ordinary skill in the art. For instance, the compressor unit may have only one compression cylinder. A different embodiment may position dual cylinders in front and behind, or on top and below of the vibrator, as opposed to on either side as shown in figure 1. In addition, more than two compression cylinders may be efficiently accommodated in a similar manner via the novel structure disclosed. When cylinders are mounted in front and behind of the vibrator, the assembly is of coaxial configuration. A non-coaxial configuration is represented where cylinders are located laterally or vertically from the axis of vibration of the vibrator.

When the dual balanced compressors are utilized or an axial compressor is featured, a balanced condition exists which is a low friction, low maintenance condition and will admit to use of a sealed enclosure for the vibration assembly.

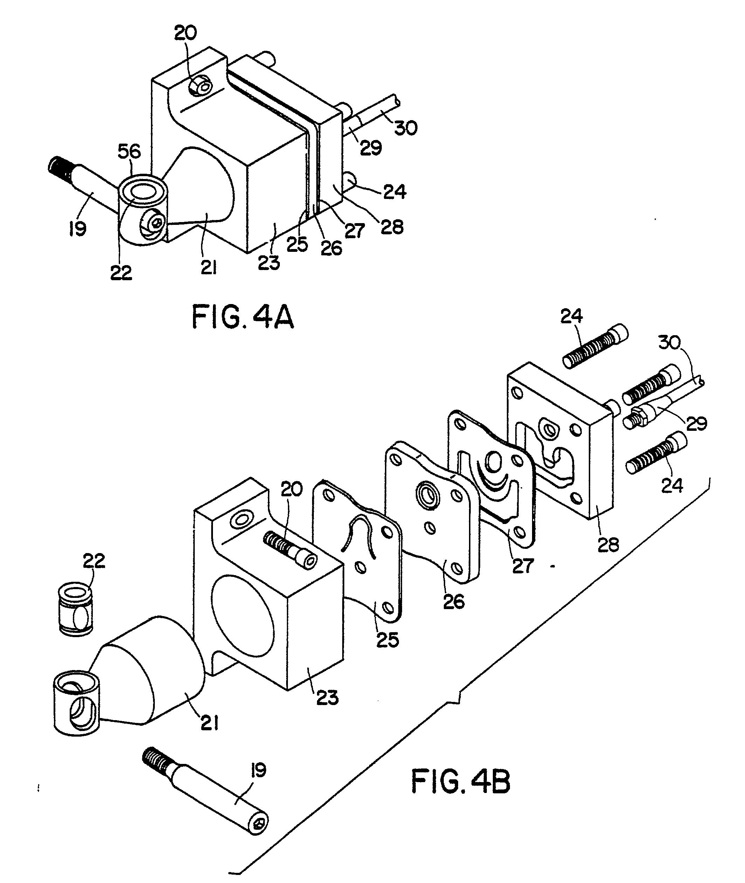

Figure 4A illustrates a perspective view of the rod and piston/cylinder assembly as non-coaxially mounted to the electromagnetic vibrator. Figure 4B is an exploded view of the compressor unit shown in Figure 4A.

In order to eliminate axial error in assembly, a sliding block 22 is arranged in the connecting head 56 which links the connecting rod 19 and piston 21. Driven by the front linking block 8, piston 21 reciprocates at one end in cylinder block 23 at a frequency and amplitude equal to those of the non-linear, harmonic electromagnetic vibrator. A valve package comprising an inlet valve 25, valve plate 26, outlet valve 27, and cylinder head 28 is mounted on the other end of the cylinder 23 by means of screws 24. During each backward stroke of the piston 21, the inlet valve 25 is opened automatically and air is sucked into cylinder 23 through an inlet hole at an upper center of the cylinder head 28 and inlet pipe. During each compressing stroke of the piston 21, the inlet valve is closed automatically onto the valve plate 26, and outlet valve 27 is opened automatically. Air in cylinder 23 is then compressed by piston 21 and is exhausted out of the compressing cylinder through an exhaust hole. Compressed air travels through an exhaust pipe connector 29 fitted on cylinder head 28, an exhaust pipe 30, a five-way pipe fitting 31, and enters a compressed air container 32. Compressed air may then be accessed, as desired, through an air-supply valve 33.

High exhaust pressure can be obtained by means of adjusting the position of the dead point of the working stroke of the piston 21 to reduce the gap between the piston crown and inlet valve 25 to be sufficiently small by the end of the working stroke of the piston.

The pressure within cylinder 32 can be indicated by a conventional pressure gage 34 connected to the five-way pipe fitting 31. The maximum output pressure the air compressor can reach is approximately 12–20 kg/cm$^2$ when the diameter of the piston 21 is 36 mm. Under a rated working pressure of 6 kg/cm$^2$, the said dual-cylinder compressor can stably produce 0.025 m$^3$ compressed air per minute. The required working pressure range can be adjusted freely by means of a pressure regulator 35 connected to the five-way pipe fitting 31. The starting current of the electromagnetic vibrating air compressor is not higher than the operating current and the said compressor can be started frequently under pressure. In addition, the compressor can always work close to resonant state within the changing range of working pressure.

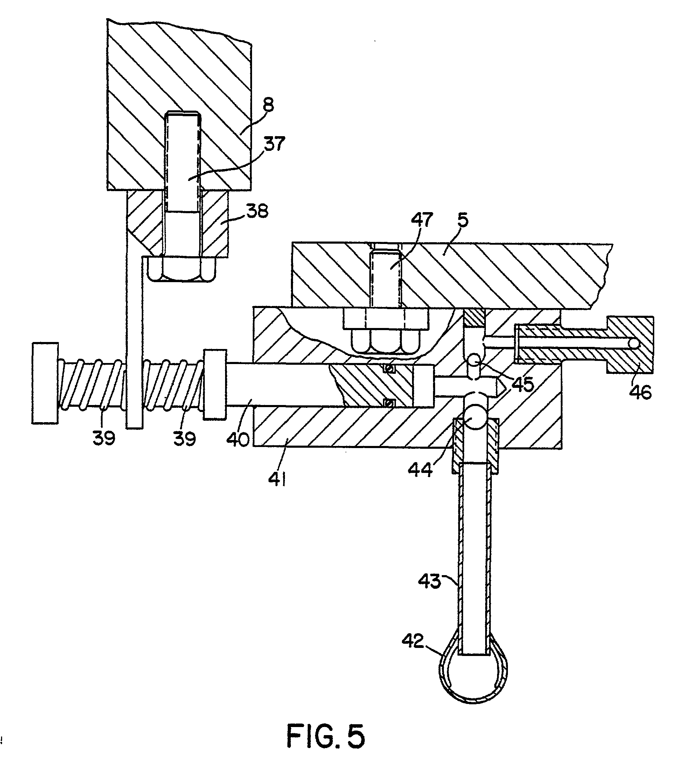

The whole electromagnetic vibrating air compressor device is installed on a base 36 by means of four isolating springs 18 (note Figures 1 and 2). A certain amount of lubricating oil is contained within the base 36. Figure 5 illustrates in detail a manner of connection between the electromagnetic vibration device and the base. In this connection a linking plate 38 is fitted under the front linking block 8 of the electromagnetic vibrator by means of a screw 37. A plunger 40 of a plunger pump which is installed on the frame 5 by screw 47 may then be driven against restraining forces of compression springs 39.

The plunger 40 reciprocates in the plunger cylinder block 41 and pumps lubricating oil through a suction pipe 43 with a filter 42 from an oil sump in the base 36 and through one-way valves 44, 45 and an outlet three-way pipe fitting 46 supplies lubricating oil at a required rate to the pistons 21 of the two air compressing cylinders. The lubricating oil returns to the storage sump of the base 36 through pistons 21 and over the oblique plane of the base and can be re-circulated again.

Figure 6 is an axonometric drawing showing a non-linear vibration power source and a compressing cylinder assembly of a single-cylinder non-linear electromagnetic air compressor whose compressing cylinder assembly and electromagnetic vibrator are arranged coaxially. The basic structure of the compressor is similar to the first embodiment shown in Figures 1-5, except that the compression cylinders) are coaxially mounted. In a simplified structure, the two sets of corrugated leaf springs on opposing sides of the vibration assembly are combined into one set and are installed at one end of the electromagnetic vibration device. A compressing cylinder 23 is directly fitted onto the frame 5 at another end of the electromagnetic vibration device, by means of screws 20. A piston 21 of the axial compressor is connected to the main vibrating section through connecting frame 49 which is fitted on the rear linking block 10 by means of screws 48.

Alternatively, the corrugated bellows spring sets need not be combined and relocated, and each compression cylinder may be mounted outside of a corresponding spring set while fixedly connected to the frame 5 via bolts 17 through plate 15 with a piston 21 coupled to elements 10. In this alternative manner, one or more than one compression cylinder may be mounted coaxially to the vibration assembly without rearrangement of a spring set. The air compressing procedure of these coaxial embodiments is similar to that of above described non-coaxial embodiments.

Summary Of The Major Advantages

A non-linear electromagnetic vibration device employed in the instant non-linear compression device has a higher range of vibration amplitude than an ordinary vibrator. At certain optimal exciting frequencies, it may achieve a vibration amplitude twice or more times as large as a conventional electromagnetic vibrator. Moreover, the non-linear electromagnetic vibrator exhibits an enhanced degree of working stability. This stability persists even under harsh conditions of drastically varying load, because of a high degree of adaptability characteristic of non-linearity of the vibration device. At the same time, the precision of directional vibration is enhanced because of a non-linear electromagnetic vibrator is ordinarily of a parallel quadrangle structure.

Whether a coaxial or non-coaxial configuration is employed, the subject invention includes a novel compressor structure employing a non-linear electromagnetic vibrator and is free of seizure and non-uniform wear problems associated with compressors of the prior art. Furthermore, a simple single stage link structure is employed, which greatly reduces the complexity of the device and expands its range of application utility.

As compared to conventional linear electromagnetic vibrating reciprocating fluid compressing devices, the present device has a simpler structure and can obtain greater working displacement and higher working pressure. In addition the device can always stably work close to a resonant state in a large range of pressure changes -- from null working pressure (0 kg/cm²) to a maximum working pressure. The subject device has a stable working current and does not rise when working pressure increases and can frequently start at any time without difficulty under null load or under pressure. The present device has accurate motion orientation and can avoid sticking between piston and cylinder and uneven wear whether it is coaxially or non-coaxially arranged with multicylinders. The present device can save approximately 50% on energy usage as compared with rotary motor powered reciprocating fluid compressing devices having a similar displacement and working pressure.

The present device can be composed of a non-linear electromagnetic vibrator and different kinds of reciprocating compression cylinder assemblies and can be widely used in different application environments including those of a refrigerating compressor, an air compressor, and pumps.

The novel structure of the subject invention produces a larger discharge with a simple configuration. A high working pressure may be achieved. The compression unit can operate steadily and persistently in or near a resonance state despite variations in load pressure. Furthermore, the working current does not rise when the load pressure is increased nor does it fall when the device is in resonance.

Alternative Embodiments

In describing the subject invention, reference has been made to preferred embodiments. Those skilled in the art, however, and familiar with the disclosure of the subject invention, may recognize additions, deletions, substitutions, modifications and/or other changes which will fall within the invention claimed.

## Claims

1. An electromagnetic, vibration, fluid compression device (20) comprising a first part (1, 5, 15) defining a core of an electromagnet, a second part (6, 8, 10) defining an armature for said electromagnet, an electromagnetic coil (9), means (Figure 7) for supplying electric current pulses to said coil (9) to induce relative vibration of said parts, spring means (13) for providing a restoring force between said parts, a piston (21) operably connected to one of said first and second parts, and a cylinder (23) operatively connected to the other of said first and second parts, said piston (21) being received in said cylinder and reciprocating therein in response to vibration of said first and second parts, characterised in that said spring means (13) is operable to produce a non-linear restoring force and comprises at least one set (13) of substantially rectangular leaf springs each having connection means at opposite edges thereof whereby they are rigidly fixed to one of said parts, and intermediate connection means whereby they are rigidly fixed to the other of said parts the areas of each said spring between said connection means defining in cross-section a waveform shape.

2. A device as claimed in claim 1, wherein the piston (21) is connected to said second part and the cylinder (23) is connected to said first part.

3. A device as claimed in claim 1 or 2, wherein said cylinder (23) is mounted with a central axis offset from and parallel with a major axis of said first and second parts, and link means (19) is provided for connecting said piston (21) to its associated part.

4. A device according to any one of the preceding claims, wherein two cylinders (23) and associated pistons (21) each as claimed in any one of the preceding claims are provided.

5. A device as claimed in claim 4, wherein the cylinders (23) are arranged on opposite sides of said first and second parts.

6. A device as claimed in claim 4 or 5 when dependent on claim 3, wherein each said link means (19) comprises a support block (8) to which an end (6) of said electromagnetic armature is connected, and a link member (19) fixedly connecting a piston (21) to said support block (8), and each of said link members includes a rod (19) having a major axis disposed substantially perpendicular to a major axis of vibration of said first and second parts and to the axis of the associated cylinder (23).

7. A device (Figure 6) as claimed in claim 1 or 2, wherein the cylinder (23) is coaxially mounted with respect to a major axis of vibration of said first and second parts.

8. A device as claimed in any one of the preceding claims, wherein said first part comprises a generally U-shaped electromagnet core (1) mounted about said coil (9), and a generally U-shaped frame (5) surrounding and receiving said generally U-shaped electromagnet core (1) and being releasably connected to the lateral surfaces of said core (1).

9. A device as claimed in claim 8, wherein the or each cylinder (23) is securely connected to said U-shaped frame (5), and the or each piston (23) is operably connected to said electromagnet armature (6, 8, 10).

10. A device as claimed in any one of the preceding claims, wherein said armature (6) has a generally T-shaped configuration with a leg element extending into said generally U-shaped core (1) to a position wherein the end of the leg element is adjacent to but spaced from a base portion of said generally U-shaped core (1), the gap between the free end of the leg element of the armature (6) and the base portion of the U-shaped electromagnet core (1) being equal to a gap that exists between arm portions of the T-shaped armature (6) and end most leg portions of the U-shaped electromagnet core (1).

11. A device as claimed in claim 10, wherein said second part further comprises a second linking block (10) connected to said armature (6) and extending adjacent but spaced from the exterior of said electromagnet core (1), and means (7) for operably connecting said armature (6) to said block (10).

12. A device as claimed in any one of the preceding claims, wherein said set (13) of springs comprises a plurality of generally rectangular, non-linear bellows, plate springs which are stacked together but spaced apart into a mutually parallel array.

13. A device as claimed in any one of the preceding claims, wherein there are two sets (13) of springs connecting said first and second parts.

14. A device as claimed in any one of the preceding claims, wherein the number of plate springs in the or each set (13) equals the square of an integer (n) times a predetermined number to achieve harmonic resonance.

15. A device as claimed in any of claims 1 to 13, wherein the number of plate springs in each said set (13) equals a square of an inverse integer (1/n) times a predetermined number to achieve harmonic resonance.

16. A device as claimed in any one of the preceding claims, further comprising lubricating fluid pump means (Figure 5) connected between said first and second parts for delivering lubricating fluid to said device.

**Patentansprüche**

1. Elektromagnetische Schwing-Einrichtung (20) zum Verdichten eines Fluids, mit einem einen Kern eines Elektromagneten bildenden ersten Teil (1, 5, 15), einem einen Anker für den Elektromagneten bildenden zweiten Teil (6, 8, 10), einer elektromagnetischen Spule (9), einer Vorrichtung (Figur 7) zur Versorgung der Spule (9) mit elektrischen Stromimpulsen, um ein relatives Schwingen der Teile herbeizuführen, einem Federelement (13) zur Bereitstellung einer Rückstellkraft zwischen den Teilen, einem mit entweder dem ersten oder dem zweiten Teil in Wirkverbindung stehenden Kolben (21) und einem mit dem anderen Teil in Wirkverbindung stehenden Zylinder (23), wobei der Kolben (21) im Zylinder aufgenommen ist und sich darin bei Schwingen des ersten und zweiten Teils hin- und herbewegt, dadurch gekennzeichnet, daß das Federelement (13) zur Erzeugung einer nicht-linearen Rückstellkraft ausgebildet ist und wenigstens einen Satz (13) von im wesentlichen rechteckigen Blattfedern umfaßt, von denen jede an gegenüberliegenden Kanten der Feder Verbindungsvorrichtungen, durch welche die Blattfedern starr an einem der Teile befestigt sind, und Zwischenverbindungsvorrichtungen, durch welche sie starr an dem anderen der Teile befestigt sind, aufweist, wobei die Federzonen zwischen den Verbindungsvorrichtungen im Querschnitt jeweils eine wellenförmige Gestalt bilden.

2. Einrichtung nach Anspruch 1, bei welcher der Kolben (21) mit dem zweiten Teil und der Zylinder (23) mit dem ersten Teil verbunden ist.

3. Einrichtung nach Anspruch 1 oder 2, bei welcher der Zylinder (23) so angebracht ist, daß eine zentrale Achse des Zylinders gegenüber einer Hauptachse des ersten und zweiten Teils parallelversetzt ist, und eine Kopplungsvorrichtung (19) zur Verbindung des Kolbens (21) mit seinem zugeordneten Teil vorgesehen ist.

4. Einrichtung nach einem der vorhergehenden Ansprüche, bei welcher zwei Zylinder (23) und zugeordnete Kolben (21) jeweils gemäß einem der vorhergehenden Ansprüche vorgesehen sind.

5. Einrichtung nach Anspruch 4, bei welcher die Zylinder (23) an entgegengesetzten Seiten des ersten und zweiten Teils angeordnet sind.

6. Einrichtung nach Anspruch 4 oder 5, soweit auf Anspruch 3 zurückbezogen, bei welcher jede Kopplungsvorrichtung (19) einen Stützblock (8), mit dem ein Ende (6) des elektromagnetischen Ankers verbunden ist, und ein Kopplungselement (19), das einen Kolben (21) fest mit dem Stützblock (8) verbindet, umfaßt und jedes der Kopplungselemente eine Stange (19) mit einer Hauptachse aufweist, die im wesentlichen senkrecht zu einer Hauptschwingungsachse des ersten und zweiten Teils und zur Achse des zugeordneten Zylinders (23) angeordnet ist.

7. Einrichtung (Figur 6) nach Anspruch 1 oder 2, bei welcher der Zylinder (23) koaxial bezüglich einer Hauptschwingungsachse des ersten und zweiten Teils angebracht ist.

8. Einrichtung nach einem der vorhergehenden Ansprüche, bei welcher das erste Teil einen im großen und ganzen U-förmigen, um die Spule (9) herum angebrachten elektromagnetischen Kern (1) und einen im großen und ganzen U-förmigen Rahmen (5) aufweist, der den im großen und ganzen U-förmigen elektromagnetischen Kern (1) umgibt und aufnimmt und mit den Seitenflächen des Kerns (1) lösbar verbunden ist.

9. Einrichtung nach Anspruch 8, bei welcher der bzw. jeder Zylinder (23) sicher mit dem U-förmigen Rahmen (5) verbunden ist und der bzw. jeder Kolben (21) mit dem elektromagnetischen Anker (6, 8, 10) in Wirkverbindung steht.

10. Einrichtung nach einem der vorhergehenden Ansprüche, bei welcher der Anker (6) eine im großen und ganzen T-förmige Gestalt besitzt mit einem Schenkel, der sich in den im großen und ganzen U-förmigen Kern (1) bis zu einer Position erstreckt, bei der das Ende des Schenkels benachbart zu, aber beabstandet von einem Grundabschnitt des im großen und ganzen U-förmigen Kerns (1) liegt, wobei der Spalt zwischen dem freien Ende des Schenkels des Ankers (6) und dem Grundabschnitt des U-förmigen elektromagnetischen Kerns (1) gleich einem Spalt ist, der zwischen Armabschnitten des T-förmigen Ankers (6) und äußersten Schenkelabschnitten des U-förmigen elektromagnetischen Kerns (1) liegt.

11. Einrichtung nach Anspruch 10, bei welcher das zweite Teil ferner einen zweiten Kopplungsblock (10) umfaßt, der mit dem Anker (6) verbunden ist und sich benachbart zu, aber beabstandet von dem Äußeren des elektromagnetischen Kerns (1) erstreckt, und eine Vorrichtung (7) umfaßt, um den Anker (6) mit dem Block (10) in Wirkverbindung zu bringen.

12. Einrichtung nach einem der vorhergehenden Ansprüche, bei welcher der Federsatz (13) eine Mehrzahl von im großen und ganzen rechteckigen, nicht-linearen Balgenblattfedern umfaßt, die unter gegenseitigem Abstand zu einer untereinander parallelen Schichtanordnung zusammengestapelt sind.

13. Einrichtung nach einem der vorhergehenden Ansprüche, bei welcher zwei Sätze (13) von den ersten und zweiten Teil verbindenden Federn vorliegen.

14. Einrichtung nach einem der vorhergehenden Ansprüche, bei welcher die Anzahl von Blattfedern in dem bzw. jedem Satz (13) gleich ist dem Quadrat einer ganzen Zahl (n) multipliziert mit einer vorgegebenen Zahl, um harmonische Resonanz zu erzielen.

15. Einrichtung nach einem der Ansprüche 1 bis 13, bei welcher die Anzahl von Blattfedern in jedem Satz (13) gleich ist einem Quadrat des Kehrwerts (1/n) einer ganzen Zahl multipliziert mit einer vorgegebenen Zahl, um harmonische Resonanz zu erzielen.

16. Einrichtung nach einem der vorhergehenden Ansprüche, welche ferner eine zwischen das erste und zweite Teil geschaltete Schmierfluid-Pumpvorrichtung (Figur 5) zur Förderung eines Schmierfluids an die Einrichtung umfaßt.

**Revendications**

1. Dispositif (20) de vibration électromagnétique pour la compression d'un fluide comprenant une première partie (1, 5, 15) définissant un noyau d'un électro-aimant, une seconde partie (6, 8, 10) définissant une armature pour ledit électro-aimant, une bobine d'électro-aimant (9), un moyen (figure 7) pour fournir des impulsions de courant électrique à ladite bobine (9) pour induire une vibration relative des parties, un moyen à ressort (13) pour fournir une force de rappel entre lesdites parties, un piston (21) relié de façon opérable à une desdites première et seconde parties, et un cylindre (23) connecté de façon opérable à l'autre desdites première et seconde parties, ledit piston (21) étant reçu dans ledit cylindre et exécutant un mouvement de va-et-vient dans celui-ci en réponse à la vibration desdites première et seconde parties, caractérisé en ce que ledit moyen à ressort (13) est opérable pour produire une force de rappel non linéaire et comprend au moins un jeu (13) de ressorts à lames substantiellement rectangulaires, chaque ressort ayant des moyens de connexion aux extrémités opposées pour le fixer de façon rigide à une desdites parties, et un moyen de connexion intermédiaire pour le fixer de façon rigide à l'autre desdites parties, la zone de chacun des ressorts entre lesdits moyens de connexion définissant en coupe la forme d'une onde.

2. Dispositif selon la revendication 1, dans lequel le piston (21) est connecté à ladite seconde partie et le cylindre (23) est connecté à ladite première partie.

3. Dispositif selon la revendication 1 ou 2, dans lequel ledit cylindre (23) est monté avec son axe central déplacé de, mais parallèle à l'axe principal desdites première et seconde parties, et un moyen d'attache (19) est prévu pour connecter ledit piston (21) à sa partie associée.

4. Dispositif selon l'une quelconque des revendications précédentes, dans lequel deux cylindres (23) et pistons associés (21), chacun conçu tel que revendiqué dans une des revendications précédentes, sont prévus.

5. Dispositif selon la revendication 4, dans lequel les cylindres (23) sont arrangés sur des côtés opposés desdites première et seconde parties.

6. Dispositif selon la revendication 4 ou 5, si elle dépend de la revendication 3, dans lequel chaque moyen d'attache (19) comprend un bloc de support (10) auquel une extrémité (6) de ladite armature électromagnétique est connectée, et un moyen d'attache (19) connectant de façon fixe un piston (21) audit bloc de support (8), et dans lequel chaque moyen d'attache comprend une tige (19) ayant un axe principal disposé substantiellement perpendiculairement à l'axe principal de vibration desdites première et seconde parties et à l'axe du cylindre associé (23).

7. Dispositif (figure 6) selon la revendication 1 ou 2, dans lequel le cylindre (23) est monté coaxialement par rapport à l'axe principal de vibration desdites première et seconde parties.

8. Dispositif selon l'une quelconque des revendications précédentes, dans lequel la première partie comprend un noyau électromagnétique (1) de forme générale en U monté autour de ladite bobine (9), et un cadre (5) formé de façon générale en U entourant et recevant ledit noyau électromagnétique (1) formé de façon générale en U et pouvant être connecté de façon amovible aux surfaces latérales dudit noyau (1).

9. Dispositif selon la revendication 8, dans lequel le ou chaque cylindre (23) est connecté de façon sure au cadre (5) en forme de U et le ou chaque piston (21) est connecté de façon opérable à ladite armature électromagnétique (6, 8, 10).

10. Dispositif selon l'une quelconque des revendications précédentes, dans lequel ladite armature (6) a une forme généralement en T avec une branche s'étendant dans ledit noyau (1) de forme générale en U jusque dans une position où l'extrémité de la branche est adjacente à, mais espacée d'une partie de base du noyau (1) en forme générale de U, le vide entre l'extrémité libre de la branche de l'armature (6) et de la partie de base du noyau (1) de forme généralement en U étant égal au vide qui existe entre les parties de bras de l'armature (6) en forme de T et les parties extrêmes des branches du noyau électromagnétique (1) en forme de U.

11. Dispositif selon la revendication 10, dans lequel ladite seconde partie comprend en outre un second bloc d'attache (10) connecté à ladite armature et s'étendant adjacent à, mais espacé de l'extérieur dudit noyau (1) d'électro-aimant, et des moyens (7) pour connecter de façon opérable ladite armature (6) audit bloc (10).

12. Dispositif selon l'une quelconque des revendications précédentes, dans lequel ledit jeu (13) de ressorts comprend une pluralité de ressorts à lame et soufflet rectangulaire non linéaire qui sont empilés mais espacés l'un de l'autre dans une disposition où ils sont parallèles l'un à l'autre.

13. Dispositif selon l'une quelconque des revendications précédentes, dans lequel on trouve deux jeux (13) de ressorts connectant lesdites première et seconde parties.

14. Dispositif selon l'une quelconque des revendications précédentes, dans lequel le nombre de ressorts à lame dans le ou chaque jeu (13) est égal au carré d'un nombre entier (n) multiplié par un nombre prédéterminé pour réaliser une raisonnance harmonique.

15. Dispositif selon l'une quelconque des revendications 1 à 13, dans lequel le nombre de ressorts à lame dans chaque jeu (13) est égal au carré de l'inverse d'un nombre entier multiplié par un nombre prédéterminé pour réaliser une raisonnance harmonique.

16. Dispositif selon l'une quelconque des revendications précédentes, comprenant en outre un moyen de pompage pour un fluide lubrifiant (figure 5) connecté entre lesdites première et seconde parties pour fournir un fluide lubrifiant audit dispositif.

FIG.1

FIG. 2

FIG. 3

FIG. 4A

FIG. 4B

FIG.5

RD    ZG

**FIG. 7**

**FIG. 6**